# EUROPEAN PATENT SPECIFICATION

(11) **EP 1 723 071 B1**
(45) Date of publication and mention of the grant of the patent: **31.10.2012**
(21) Application number: 05724694.4
(22) Date of filing: 04.03.2005
(51) Int. Cl.: B05B 9/04

(54) **TRIGGER SPRAYER HAVING SECURE DELIVERY TUBE CONNECTION**
ZERSTÄUBER VOM TRIGGERTYP MIT SICHERER ZUFÜHRUNGSROHRVERBINDUNG
PULVERISATEUR A GACHETTE POSSEDANT UN RACCORD DE CONDUIT SECURISE.

(30) Priority: 05.03.2004 US 549902 P
(43) Date of publication of application: 22.11.2006
(73) Proprietor: MeadWestvaco Calmar, Inc., NC 27606 (US)
(72) Inventor: DODD, Joseph, K., Lee's Summit, MO 64802 (US); WANBAUGH, Linn, D., Blue Springs, MO 64015 (US)
(74) Representative: Austin, Hedley William
(86) International application number: PCT/US2005/007196
(87) International publication number: WO 2005/087651

(56) References cited:
- WO-A-88/06693
- DE-A1- 3 521 387
- US-A- 5 275 447
- US-A- 5 839 620
- US-A- 5 839 620
- US-A- 5 860 574
- US-A1- 2003 213 816
- US-B1- 6 170 706
- US-B1- 6 409 052
- US-B1- 6 409 052
- US-B2- 6 779 693
- US-B2- 6 779 693

## Description

### BACKGROUND OF INVENTION

### a. Field of Invention

The invention relates generally to a trigger actuated dispensing system and, more particularly, to a dispensing assembly for connecting a remote trigger sprayer to a container of liquid to be dispensed.

### b. Description of Related Art

Remote dispensing systems for spraying of especially pesticides, insecticides, plant and grass nutrients, and the like, for lawn and garden applications, have been available in many forms for a number of years. One such system disclosed in U.S. Pat. No. 5,553,750, includes a trigger sprayer having a cylindrical handle connected to a container closure and having a flexible tube stored in accordance with one embodiment within the container during periods of non-use and capable of being drawn from the container during a spraying operation. In another embodiment, the flexible tube is coiled and stored within a receptacle located within the container during periods of the non-use. During the spraying operation, the trigger sprayer is removed from the closure and the tube is uncoiled from its receptacle.

During the spraying operation, the tube can be pulled and may thereby become disconnected from the container and/or the trigger sprayer. One method of preventing such disconnection is to insert the tube within multiple fittings within the trigger sprayer and/or the container closure. Although the use of multiple fittings provides adequate retention for initial usage, repeated pulling over a period of time and changes in the tube structural conditions due to interaction with product tend to deteriorate the seal between the tube and fittings, thus leaving the tube susceptible to complete disconnect from the sprayer and/or container.

U.S. Pat. No. 6,050,459, discloses a rigid dip tube connector for a liquid spray dispenser which includes a cap body having a shipper cap hinged over its upper end and a connector attached to the flexible tube to effect connection of a trigger sprayer to the container. The coupler between the connector and the closure is however so structured that it presents a relatively insecure coupling, and is susceptible to disconnection from the container when pulled.

There is therefore a need to improve upon such a connector which would be of simpler and less costly design yet highly effective in coupling a flexible tube to a rigid dip tube or in coupling a flexible tube and dip tube assembly to a container.

US Patent 6409052 discloses a trigger sprayer dispensing system for remote operation and includes a flexible delivery tube which may be coiled and stored within a hollow gripper handle provided on the trigger sprayer. A one-piece adaptor is non-removably connected to a distal end of the delivery tube and connects to the container by mounting directly to an external dip tube of the container or by mounting in a closure cap of the container. There is a further need to improve upon such systems to make them simpler and less costly yet highly effective in coupling a flexible tube to a rigid dip tube or a flexible tube and dip tube assembly to a container.
US 6170706 discloses an assembly according to the preamble of claim 1.

### SUMMARY OF INVENTION

It is an object of the invention to provide an improved trigger sprayer dispensing system for securely connecting the trigger sprayer to a container of liquid in a manner rendering it easier to mass produce, store and ship, and convenient to carry, use and re-store for later usage. The present invention therefore provides an assembly for connecting a remote power sprayer to a container of liquid, the assembly being as set out in claim 1.

Generally, the flexible delivery tube includes one end thereof non-removably connected to a remote retainer and the other end thereof non-removably connected to a connector hose. The remote retainer and connector hose each include strain relief means which respectively include a retainer adaptor and a connector adaptor for relieving the connection strain between the tube, the remote retainer and connector hose, as the power sprayer is being pulled and manoeuvred during use.

US Patent application publication No 2003/213816 discloses apparatus for retaining and inserting a flexible tube into a spray container with a hand actuated spray or pump, but without strain relief means.

Additional features, advantages, and embodiments of the invention may be set forth or apparent from consideration of the following detailed description, drawings, and claims.

Moreover, it is to be understood that both the foregoing summary of the invention and the following detailed description are exemplary and intended to provide further explanation without limiting the scope of the invention as claimed.

### BRIEF DESCRIPTION OF THE DRAWINGS

The accompanying drawings, which are included to provide a further understanding of the invention and are incorporated in and constitute a part of this specification, illustrate preferred embodiments of the invention and together with the detailed description serve to explain the principles of the invention. In the drawings:

Fig. 1 is an exploded view of an embodiment of the dispensing system according to the present invention, illustrating the remote retainer mounting location relative to the flexible delivery tube in its coiled storage/shipping configuration, and a cut-out section of a power sprayer handle;

Fig. 2 is a top view of the dispensing system of Fig. 1, illustrating the dispensing system in an assembled configuration and the flexible delivery tube in its coiled storage/shipping configuration;

Fig. 3 is a cross-sectional view of the dispensing system of Fig. 1, taken generally along line A-A in Fig. 2, illustrating the internal features of the dispensing system, and a cut-out section of a power sprayer handle;

Fig. 4 is a side view of the dispensing system of Fig. 1, illustrating the dispensing system in an assembled configuration and the flexible delivery tube in its coiled storage/shipping configuration; and

Fig. 5 is an enlarged view illustrative of the strain relief means for connecting the flexible delivery tube to a remote retainer and a connector hose according to the embodiment of Fig. 1.

### DETAILED DESCRIPTION OF THE PREFERRED EMBODIMENTS

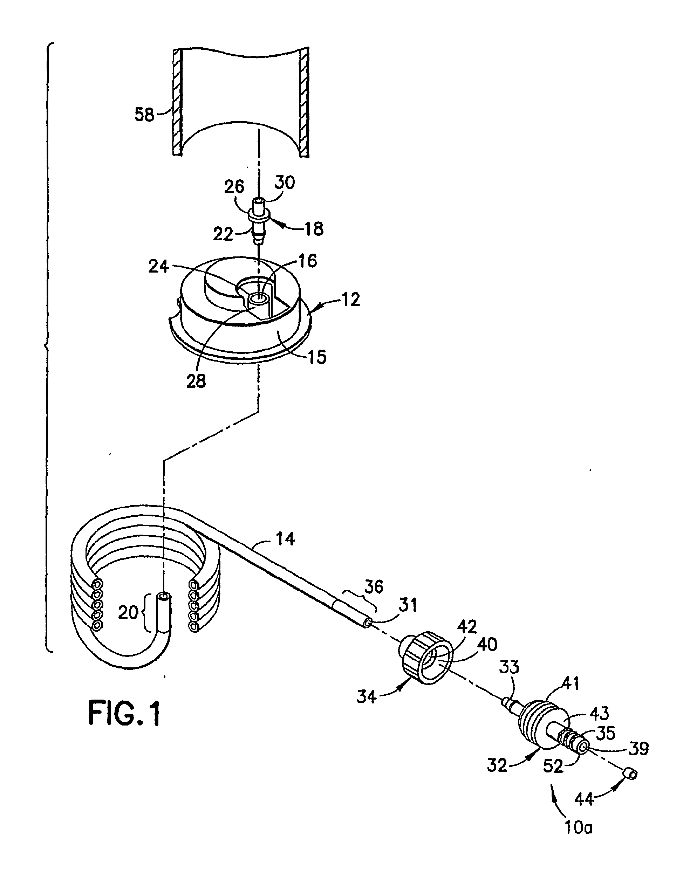

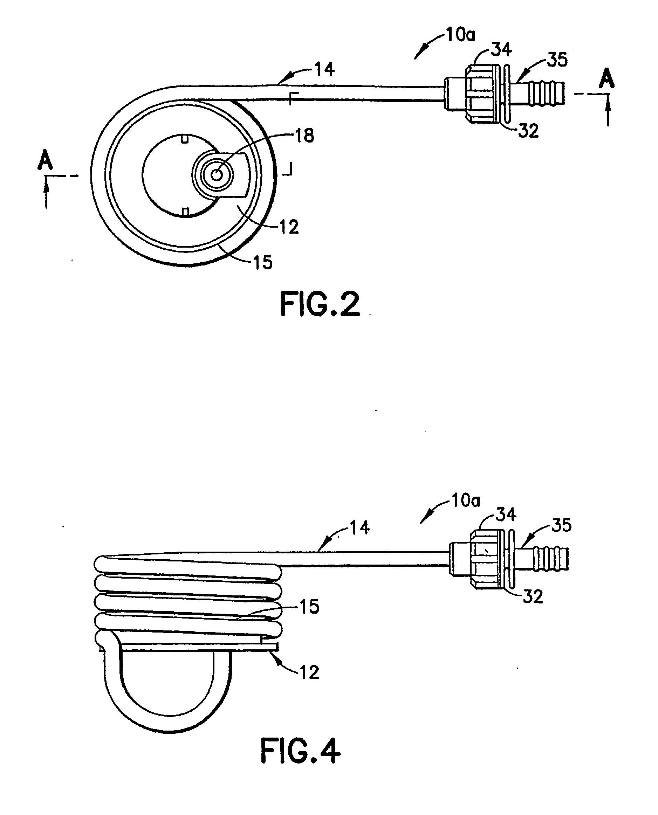

Reference will now be made to the drawings wherein like reference numerals designate corresponding parts throughout the several views. As shown in Figs. 1 to 5, the dispensing system 10 may generally include a trigger sprayer, such as a power sprayer 58 of known design removably mounted onto remote retainer 12 for spraying liquid product from a container (not shown) therethrough. The container may include a liquid to be dispensed such as for lawn or garden treatment, and may be of a high density polypropylene. Dispensing system 10 may include flexible delivery tube 14 inserted into elongated opening 16 of remote retainer 12 and plugged onto one end of retainer adaptor 18 until it reaches retention ring 26 of retainer adaptor 18.

As shown in Figs. 1, 3 and 5, tube 14 may be sealingly retained within elongated opening 16 such that the internal wall of section 20 is sealingly disposed onto tube retention nipple 22 of adaptor 18, and the external wall of section 20 is sealingly compressed by internal wall 24 of elongated opening 16. In this manner, with section 20 of tube 14 clamped between elongated opening 16 and tube retention nipple 22 of adaptor 18, retainer adaptor 18 functions to relieve the connection strain between remote retainer 12 and tube 14 as power sprayer 58 is manoeuvered during use, which tends to disconnect tube 14 from remote retainer 12. Tube retention nipples 22 and 33 (described below) of retainer adaptor 18 and connector hose 32 (described below), respectively, may each include circular ridges 56 which dig into tube 14 to prevent tube 14 from being removed therefrom.

In the embodiment of Figs. 1 to 5, retention ring 26 of retainer adaptor 18 may be disposed in contiguous engagement with upper rim 28 of elongated opening 16 to prevent adaptor 18 from being inserted through opening 16. The opposite nipple 30 of adaptor 18 may include a product inlet tube (not shown) connected to a product housing (not shown) within power sprayer 58 for supplying product from tube 14 out through the power sprayer, as discussed in greater detail in co-owned U.S. Serial No. 10/791,285, entitled "Discharge/Vent Module for Power Sprayer," filed March 3, 2004

As illustrated in Figs. 1 to 5, flexible delivery tube 14 may be coiled during storage and shipping around ring 15 of remote retainer 12, and may extend longitudinally upon uncoiling thereof for discharging product therethrough. Additionally, during storage and shipping, tube 14 and the remaining components of dispensing system 10 may be generally retained in the coiled configuration illustrated in Fig. 1 by means of shrink-wrap, clamps and the like.

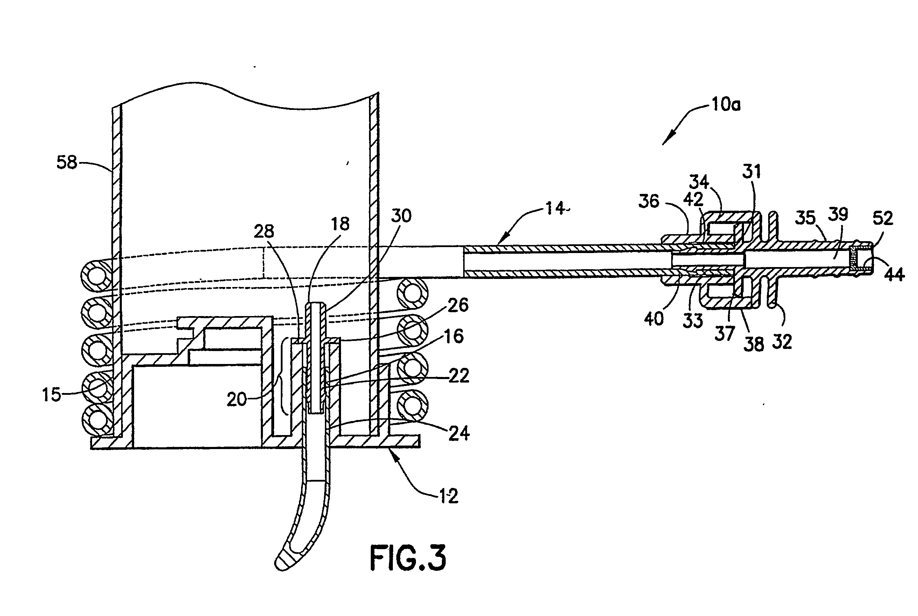

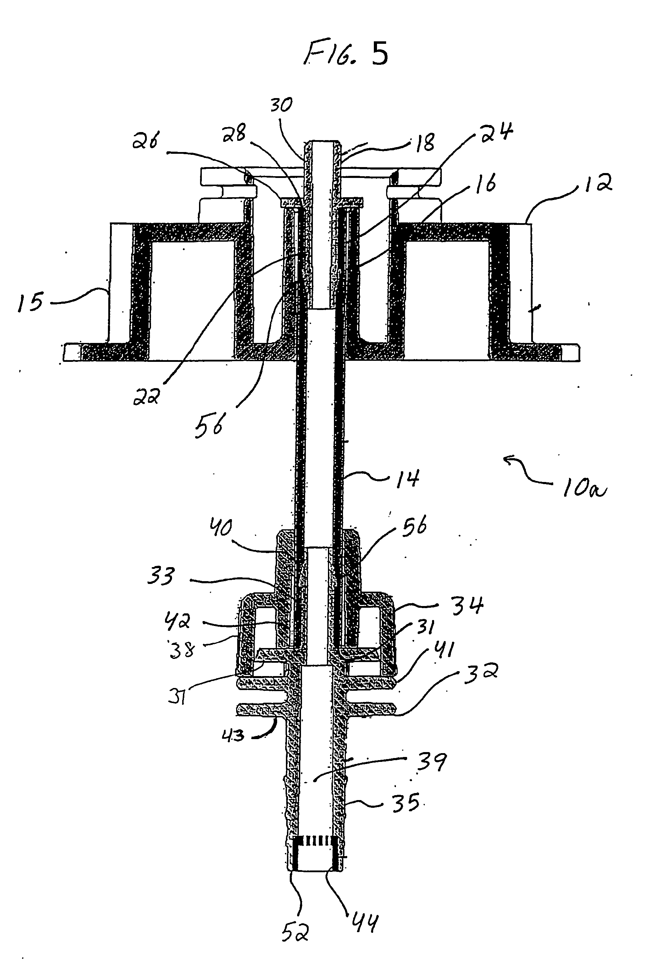

The opposite distal end 31 of tube 14 may be non-removably plugged onto connector hose 32, which may be connected to a prefabricated cylindrical hole within a closure (not shown) of a container, as discussed in detail in U.S. Patent No. 6,409,052. Tube 14 may be retained on connector hose 32 by means of connector adaptor 34. Connector hose 32 according to the present invention may be of one-piece plastic construction having a cylindrical body with a tube retention nipple 33 and an opposite nipple 35 depending therefrom. The body of connector hose 32 may include a plurality of radially extending rings 37,41, 43, and the longitudinally extending nipples 33 and 35 with a central passage 39 being coaxial with each nipple. As shown in Figs. 1, 3 and 5, section 36 of tube 14 may be plugged onto tube retention nipple 33 of connector hose 32 such that the internal wall of section 36 is sealingly disposed onto tube retention nipple 33, and the external wall of section 36 is sealingly compressed by internal wall 40 of elongated opening 42 provided in connector adaptor 34. In this manner, with section 36 of tube 14 clamped between elongated opening 42 and tube retention nipple 33, connector adaptor 34 functions to relieve the connection strain between connector hose 32 and tube 14 as the hose assembly including connector hose 32, connector adaptor 34 and filter 44 is connected to a container. Also, as best shown in Figs. 3 and 5, the connector adaptor 34 is provided with an outer wall 38 having an inner surface that extends over and frictionally engages the outer edge of ring 37 of the connector hose 32. Ring 41 of the connector hose 32 can act as a seating surface for the outer wall 38.

As briefly discussed above, and as discussed in detail in U.S. Patent No. 6,409,052, tube retention nipple 33 of connector hose 32 may be snap fitted into a prefabricated cylindrical hole in the container closure for enabling the passage of liquid product from a rigid dip tube (not shown) which extends as in any normal manner into the container toward the container bottom wall to form an inlet passage for the liquid from the container to the pump chamber of power sprayer 58, via connector hose 32, through tube 14, retainer adaptor 18, into product inlet tube and out through the power sprayer.

From the foregoing it can be seen that a simple and economical, yet highly effective dispensing system has been devised for a remote pump sprayer. In one embodiment, the flexible delivery tube includes one end thereof non-removably connected to a remote retainer and the other end thereof non-removably connected to a connector hose. The remote retainer and connector hose each include strain relief means which respectively include a retainer adaptor and a connector adaptor for relieving the connection strain between the tube, the remote retainer and connector hose, as the power sprayer is being pulled and manoeuvered during use.

## Claims

1. An assembly for connecting a remote trigger actuated power sprayer (58) to a container of liquid to be dispensed, with a dip tube extending inside the container, said assembly including a retainer (12) adapted to be coupled to the power sprayer, the retainer including a wall (24) defining a first elongated opening (16) therein, a connector hose (32) adapted to be coupled to the container of liquid such that the connector hose is in fluid communication with the dip tube, and a flexible hollow fluid delivery tube (14) having a first end (20) coupled to said retainer (12) and a distal end (36) coupled to said connector hose (32), the assembly comprising first strain relief means (18) and second strain relief means (34),
said first strain relief means (18) being for relieving the connection strain between said retainer (12) and said first end (20) of said delivery tube (14) when said retainer (12) is coupled to said power sprayer (58), and said second strain relief means (34) being for relieving the connection strain between said distal end (36) of said delivery tube (14) and said connector hose (32) with the connector hose (32) in fluid communication with the dip tube, **characterised in that** said first strain relief means (18) includes a first tube retention device (22) retained within said first elongated opening (16), wherein said first end (20) of said delivery tube (14) extends over said first tube retention device (22) and is captured between said first tube retention device (22) and said wall (24); and **in that**
said second strain relief means (34) includes a second tube retention device (33) and further includes a connector adaptor having a wall (40) defining a second elongated opening (42), and said distal end (36) of said delivery tube (14) extends over said second tube retention device (33) and is captured between said second tube retention device (33) and said wall (40) defining said second elongate opening (42).

2. An assembly according to claim 1, wherein said second tube retention device is integral with said connector hose.

3. An assembly according to claim 1, wherein said first tube retention device (22) comprises a first nipple having ridges (56) which engage said first end (20) of said delivery tube (14).

4. An assembly according to claim 3, wherein said first tube retention device (22) further comprises a second nipple (30) disposed opposite the first nipple, for connection to the power sprayer (58).

5. An assembly according to any preceding claim, wherein said second tube retention device (33) comprises a distal nipple having ridges which engage said distal end (36) of said delivery tube (14).

6. An assembly according to claim 1, wherein said connector hose (32) includes at least one radially extending element (37,41) which frictionally engages said connector adaptor.

7. An assembly according to any preceding claim, wherein said delivery tube (14) is operably retained in a coiled configuration about said retainer (12).

## Patentansprüche

1. Anordnung zum Verbinden einer fernauslöserbetätigten Leistungsspritzvorrichtung (58) mit einem Behälter mit Flüssigkeit, die auszubringen ist, mit einem Tauchrohr, das sich innerhalb des Behälters erstreckt, wobei die Anordnung einen Halter (12) beinhaltet, der eingerichtet ist, um mit der Leistungsspritzvorrichtung gekoppelt zu werden, wobei der Halter eine Wand (24), die eine erste längliche Öffnung (16) darin definiert, einen Verbindungsschlauch (32), der eingerichtet ist, um mit dem Behälter mit Flüssigkeit gekoppelt zu werden, so dass der Verbindungsschlauch in Fluidkommunikation mit dem Tauchrohr ist, und ein flexibles, hohles Fluidzuleitungsrohr (14) beinhaltet, das ein erstes Ende (20), das mit dem Halter (12) gekoppelt ist, und ein distales Ende (36) aufweist, das mit dem Verbindungsschlauch (32) gekoppelt ist, wobei die Anordnung erstes Mittel zum Spannungsabbau (18) und zweites Mittel zum Spannungsabbau (34) umfasst,
wobei das erste Mittel zum Spannungsabbau (18) zum Abbauen der Spannung der Verbindung zwischen dem Halter (12) und dem ersten Ende (20) des Zuleitungsrohrs (14) ist, wenn der Halter (12) mit der Leistungsspritzvorrichtung (58) gekoppelt ist, und das zweite Mittel zum Spannungsabbau (34) zum Abbauen der Spannung der Verbindung zwischen dem distalen Ende (36) des Zuleitungsrohrs (14) und dem Verbindungsschlauch (32) ist, mit dem Verbindungsschlauch (32) in Fluidkommunikation mit dem Tauchrohr, **dadurch gekennzeichnet, dass** das erste Mittel zum Spannungsabbau (18) eine erste Rohrrückhaltevorrichtung (22) beinhaltet, die innerhalb der ersten länglichen Öffnung (16) gehalten wird, wobei sich das erste Ende (20) des Zuleitungsrohrs (14) über die erste Rohrrückhaltevorrichtung (22) erstreckt und zwischen der ersten Rohrrückhaltevorrichtung (22) und der Wand (24) festgehalten wird; und dass
das zweite Mittel zum Spannungsabbau (34) eine zweite Rohrrückhaltevorrichtung (33) beinhaltet und ferner einen Verbindungsadapter beinhaltet, der eine Wand (40) aufweist, die eine zweite längliche Öffnung (42) definiert, und sich das distale Ende (36) des Zuleitungsrohrs (14) über die zweite Rohrrückhaltevorrichtung (33) erstreckt und zwischen der zweiten Rohrrückhaltevorrichtung (33) und der Wand (40), welche die zweite längliche Öffnung (42) definiert, festgehalten wird.

2. Anordnung nach Anspruch 1, wobei die zweite Rohrrückhaltevorrichtung einstückig mit dem Verbindungsschlauch ist.

3. Anordnung nach Anspruch 1, wobei die erste Rohrrückhaltevorrichtung (22) einen ersten Nippel umfasst, der Rippen (56) aufweist, die in das erste Ende (20) des Zuleitungsrohrs (14) einrücken.

4. Anordnung nach Anspruch 3, wobei die erste Rohrrückhaltevorrichtung (22) ferner einen zweiten Nippel (30), der dem ersten Nippel entgegengesetzt angeordnet ist, zum Verbinden mit der Leistungsspritzvorrichtung (58) umfasst.

5. Anordnung nach einem der vorhergehenden Ansprüche, wobei die zweite Rohrrückhaltevorrichtung (33) einen distalen Nippel umfasst, der Rippen aufweist, die in das distale Ende (36) des Zuleitungsrohrs (14) einrücken.

6. Anordnung nach Anspruch 1, wobei der Verbindungsschlauch (32) mindestens ein sich radial erstreckendes Bauteil (37, 41) beinhaltet, das reibschlüssig mit dem Verbindungsadapter ist.

7. Anordnung nach einem der vorhergehenden Ansprüche, wobei das Zuleitungsrohr (14) betriebsbereit in einer gewickelten Konfiguration um den Halter (12) gehalten wird.

## Revendications

1. Ensemble pour relier un pulvérisateur à moteur actionné par déclencheur à distance (58) à un contenant de liquide à distribuer, comprenant un tube plongeur s'étendant à l'intérieur du contenant, ledit ensemble comprenant une fixation (12) adaptée pour être couplée au pulvérisateur à moteur, la fixation comprenant une paroi (24) définissant une première ouverture allongée (16) à l'intérieur, un tuyau connecteur (32) adapté pour être couplé au contenant de liquide de telle façon que le tuyau connecteur soit en communication fluidique avec le tube plongeur, et un tube de fourniture de fluide creux et flexible (14) présentant une première extrémité (20) couplée à ladite fixation (12) et une extrémité distale (36) couplée au ledit tuyau connecteur (32), l'ensemble comprenant un premier moyen de détendeur (18) et un second moyen de détendeur (34),
ledit premier moyen de détendeur (18) étant pour soulager la tension de liaison entre ladite fixation (12) et ladite première extrémité (20) du tube de fourniture (14) lorsque ladite fixation (12) est couplée au ledit pulvérisateur à moteur (58), et ledit second moyen de détendeur (34) étant pour soulager la tension de liaison entre ledit extrémité distale (36) du tube de fourniture (14) et ledit tuyau connecteur (32) avec le tuyau connecteur (32) en communication fluidique avec le tube plongeur, **caractérisé en ce que** ledit premier moyen de détendeur (18) comprend un premier dispositif de retenue du tube (22) fixé à l'intérieur de la ladite première ouverture allongée (16), dans lequel ladite première extrémité (20) du tube de fourniture (14) s'étend au-dessus du premier dispositif de retenue du tube (22) et est capturée entre ledit premier dispositif de retenue du tube (22) et ladite paroi (24) ; et **en ce que**
ledit second moyen de détendeur (34) comprend un second dispositif de retenue du tube (33) et comprend en outre un adaptateur de connecteur présentant une paroi (40) définissant une seconde ouverture allongée (42), et l'extrémité distale (36) du tube de fourniture (14) s'étend au-dessus du second dispositif de retenue du tube (33) et est capturée entre ledit second dispositif de retenue du tube (33) et ladite paroi (40) définissant ladite seconde ouverture allongée (42).

2. Ensemble selon la revendication 1, dans lequel ledit second dispositif de retenue du tube est monobloc avec ledit tuyau connecteur.

3. Ensemble selon la revendication 1, dans lequel ledit premier dispositif de retenue du tube (22) comprend un premier mamelon présentant des cannelures (56) qui mettent en prise ladite première extrémité (20) du tube de fourniture (14).

4. Ensemble selon la revendication 3, dans lequel ledit premier dispositif de retenue du tube (22) comprend en outre un second mamelon (30) disposé à l'opposé du premier mamelon, pour la liaison au pulvérisateur à moteur (58).

5. Ensemble selon l'une des revendications précédentes, dans lequel ledit second dispositif de retenue du tube (33) comprend un mamelon distal présentant des cannelures qui mettent en prise l'extrémité distale (36) du tube de fourniture (14).

6. Ensemble selon la revendication 1, dans lequel ledit tuyau connecteur (32) comprend au moins un élément s'étendant radialement (37, 41) qui met en prise par friction l'adaptateur de connecteur.

7. Ensemble selon l'une des revendications précédentes, dans lequel ledit tube de fourniture (14) est fixé de manière opérationnelle dans une configuration spiralée autour de ladite fixation (12).
